# EUROPÄISCHE PATENTANMELDUNG

(11) **EP 3 537 022 A1**
(43) Veröffentlichungstag der Anmeldung: **11.09.2019**
(21) Anmeldenummer: 19161277.9
(22) Anmeldetag: 07.03.2019
(51) Int. Cl.: F16L 43/00, F16L 41/02, F24F 1/0053, F24F 13/02, F24F 7/04, F24F 7/10

(54) **ADAPTER UND WOHNRAUMLÜFTUNGSSYSTEM**

(30) Priorität: 09.03.2018 DE 202018101355 U
(71) Anmelder: Soler & Palau Research, S.L.U., 08150 Parets del Vallès (ES)
(72) Erfinder: Bolsmann, Christian, 85560 Ebersberg (DE); Bach-Esteve, Albert, 08150 Parets del Vallès (Barcelona) (ES)
(74) Vertreter: Keil & Schaafhausen Patent- und Rechtsanwälte PartGmbB

(57) **Zusammenfassung**

Die Erfindung betrifft einen Adapter (1), insbesondere für ein mit einer Fußbodenklimatisierung (7) verbindbares Wohnraumbelüftungssystem (8). Der Adapter weist einen ersten und einen zweiten Anschluss (2, 3) jeweils zur Verbindung mit einer Zu- oder Abluftleitung auf, wobei der erste und der zweite Anschluss (2, 3) über einen Übergangsabschnitt (4) in Strömungsverbindung miteinander stehen. Der erste und der zweite Anschluss (2, 3) sind zueinander höhenversetzt angeordnet.

## Beschreibung

Die vorliegende Erfindung betrifft einen Adapter, insbesondere für ein mit einer Fußbodenklimatisierung verbindbares Wohnraumlüftungssystem, mit einem ersten und einem zweiten Anschluss jeweils für eine Zu- oder Abluftleitung wobei der erste und der zweite Anschluss über einen Übergangsabschnitt in Strömungsverbindung miteinander stehen sowie ein entsprechendes Wohnraumlüftungssystem mit einem solchem Adapter.

Aus der DE 10 2012 008 431 U1 ist ein verbesserter in den Fußboden integrierter Luftaus- oder -einlass bekannt. Solche Aus- bzw. Einlässe eignen sich insbesondere für Lüftungssysteme, welche Zuluft in dafür vorgesehene Raumsysteme innerhalb der Fußböden einlassen, temperierten und anschließend an den entsprechenden Wohnraumsystem abgeben.

Insbesondere in dem Fall, dass die Temperierung der Zuluft über eine Fußbodenklimatisierung erfolgt, können solche Systeme die Vorteile der Fußbodenklimatisierung und kontrollierter Wohnraumlüftung kombinieren und ermöglichen ein zugfreies Heizen oder Kühlen sowie Lüften. Da eine kontrollierte Wohnraumlüftung leicht mit einem Wärmetauscher kombinierbar ist, welcher einen Wärmeaustausch zwischen Abluft aus dem Wohnraum und Zuluft herstellt, sind solche Systeme nicht nur besonders anwenderfreundlich, sondern auch äußerst energieeffizient verwendbar. Da die Zuluft im Bodensystem vorgewärmt oder vorgekühlt und anschließend in das Wohnraumsystem eingebracht wird, vermeiden diese Systeme eine Überhitzung oder Unterkühlung im Bereich der Zulufteinlässe in das Wohnraumsystem.

Allerdings weisen diese Systeme regelmäßig eine hohe Einbautiefe auf, da typischerweise auf dem eigentlichen Bodenuntergrund eine Wärme- und/oder Trittschalldämmung, der belüftbare Raumbereich zur Zuluftzuführung und außerdem die Fußbodenklimatisierung vorgesehen werden muss. Ferner ist der belüftbare Raumbereich typischerweise direkt unterhalb der Fußbodenklimatisierung vorgesehen, sodass der Wärmeaustausch zwischen der Zuluft und der Fußbodenklimatisierung optimiert wird. Dies hat jedoch wiederum den Nachteil, dass, insbesondere bei höherem Klimatisierungs- und/oder Lüftungsbedarf, Lüftungsgeräusche in den Wohnsystem eindringen, was als störend empfunden wird.

Aufgabe der vorliegenden Erfindung ist es, die oben beschriebenen Nachteile zu vermeiden. Diese Aufgabe kann überraschenderweise mit einem Adapter nach Anspruch 1 und einen erfindungsgemäßen Wohnraumbelüftungssystem nach Anspruch 9 gelöst werden.

Der erfindungsgemäße Adapter, insbesondere für ein mit einer Fußbodenklimatisierung verbundenen Wohnraumbelüftungssystem, umfasst einem ersten und einen zweiten Anschluss jeweils für eine Zu- oder Abluftleitung. Der erste und der zweite Anschluss stehen über einen Übergangsabschnitt miteinander in Strömungsverbindung und sind zueinander höhenversetzt angeordnet. Insbesondere ist die Zu- oder Abluftleitung mit einem Wärmetauschsystem, vorzugsweise einer Fußbodenklimatisierung, verbunden.

Damit ermöglicht der Adapter die Verbindung des Wärmetauschsystems mit einer tiefer liegenden Zu- oder Abluftleitung eines entsprechenden Zu- oder Abluftsystems, sodass der Wärmetauschsystems an direkt an eine Fußbodenklimatisierung angrenzend ausgestaltet werden kann und gleichzeitig die Zu- oder Abluftleitung unterhalb von dem Wärmetauschsystems vorgesehen werden kann. Dadurch wird optimierter Wärmeaustausch von der Fußbodenklimatisierung zu dem im Wärmeaustauschsystem geführten Zuluft sichergestellt und störende Geräusche der Zu- oder Abluftleitung gelangen nicht mehr in den Wohnbereich.

Ferner ist es möglich, das Wärmeaustauschsystem so auszugestalten, dass dieses trittschalldämmend wirkt, was für die Zu- und Abluftleitung regelmäßig nicht möglich ist.

Es ist bevorzugt, wenn der erste und/oder der zweite Anschluss und/oder der Übergangsabschnitt mittig eine Strömungswand aufweisen. Die Strömungswand verbessert den Durchfluss der Zu- und Abluft und verhindert die Ausbildung von strömungsfreien Bereichen. Das ist insbesondere in hygienischer Hinsicht vorteilhaft, da sich keine Ablagerungen im Adapter ausbilden.

Es ist ferner vorteilhaft, wenn der erste und/oder der zweite Anschluss in Richtung des Übergangsabschnitts aufweiten. Mit anderen Worten verbreitert sich der Adapter vom ersten und/oder zweiten Anschluss in Strömungsrichtung für den Fall, dass Zuluft in den ersten und/oder zweiten Anschluss einströmt und entgegen der Strömungsrichtung für denjenigen Fall, dass Abluft aus dem ersten und/oder zweiten Anschluss ausströmt. Dies erlaubt es, den Adapter über eine Steck- und Klemmverbindung mit einer passend ausgestalteten Zu- bzw. Abluftleitung zu verbinden. Damit wird die Montage des Adapters in einem Wohnraumlüftungssystem vereinfacht.

Es ist daher ferner vorteilhaft, wenn der erste und/oder zweite Anschluss in die Zu- oder Abluftleitung einsteckbar ausgestaltet sind.

Es ist weiter bevorzugt, dass das Verhältnis der Querschnittsfläche des ersten oder zweiten Anschlusses zu der Querschnittsfläche des zweiten oder ersten Anschlusses 1,5:1 bis 1,05:1 beträgt. Mit anderen Worten, unterscheiden sich die Querschnittsflächen des ersten und zweiten Anschlusses zueinander. Dies erzeugt innerhalb des Adapters eine Änderung der Strömungsgeschwindigkeit der Zu- bzw. Abluft, sodass Turbulenzen erzeugt und eine Ablagerung innerhalb des Adapters vermieden werden kann.

Weiter ist es vorteilhaft, wenn die Höhe des ersten Anschluss 50% ± 10% der Höhe des zweiten Anschluss entspricht oder umgekehrt. Dadurch, dass einer der Anschlüsse mit einer niedrigen Höhe ausgeführt wird, kann dieser mit einem entsprechend niedrigen Wärmeaustauschsystem eines Wohnraumbelüftungssystems verbunden werden, ohne dass die Bauhöhe des Wärmeaustauschsystems unterhalb einer Fußbodenklimatisierung unnötig vergrößert wird.

Auch ist es vorteilhaft, wenn die Breite des ersten oder zweiten Anschluss 250% ± 10% der Breite des zweiten oder ersten Anschluss entspricht. Auch hier ist der Grundgedanke, die Vermeidung unnötiger Bauraumvergrößerung, sodass es insbesondere bevorzugt ist, dass der breiter ausgeführte erste oder zweite Anschluss mit einem Wärmeaustauschsystem verbunden ist.

Weiterhin bevorzugt ist es, wenn der erste oder zweite Anschluss einen rechteckigen Querschnitt und der zweite oder erste Anschluss einen ovalen Querschnitt aufweist. Besonders bevorzugt ist dabei der Übergangsabschnitt so ausgestaltet, dass der Querschnittsübergang vom rechteckigen zum ovalen Querschnitt oder umgekehrt fließend erfolgt. Dies dient der Vermeidung von strömungsfreien Bereichen innerhalb des Adapters.

Geeignete Materialien zur Herstellung des Adapters sind Kunststoffe, da der Adapter so kostengünstig herstellbar ist. Insbesondere sind PE, PP und ABS Kunststoffe bevorzugt.

Die Erfindung betrifft ferner ein Wohnraumlüftungssystem mit einem Zu- und Abluftsystem, einer Fußbodenklimatisierung, einem Wärmeaustauschsystem zum Wärmeaustausch zwischen der Fußbodenklimatisierung und dem Zu- und Abluftsystem, und einem Adapter nach den vorherigen Ansprüchen, wobei das Zu- und Abluftsystem über das Adapter mit dem Wärmeaustauschsystem in Strömungsverbindung steht und unterhalb des Wärmeaustauschsystems angeordnet ist. Das erfindungsgemäße Wohnraumbelüftungssystem kombiniert damit die Vorteile einer Fußbodenklimatisierung und systematischer Wohnraumbelüftung und erlaubt es ferner das Zu- und Abluftsystem unterhalb eines durch das Wärmeaustauschsystem festgelegten Trittschallbereiches anzuordnen. Dadurch werden die im Zu- und Abluftsystem auftretenden Strömungsgeräusche effektiv vom dem Wohnraumbereich ferngehalten.

In Weiterführung dieses Gedankens, ist das Wärmeaustauschsystem unmittelbar unterhalb einer Fußbodenklimatisierung angeordnet ist. Dies verbessert den Wärmeaustausch zwischen der Fußbodenklimatisierung und der Zu- und Abluft.

Die Erfindung wird nachfolgend anhand eines Ausführungsbeispiels und unter Bezugnahme auf die Zeichnungen näher erläutert. Dabei bilden alle beschrieben und/oder bildlich dargestellten Merkmale für sich den Gegenstand der Erfindung, unabhängig von Ihrer Zusammenfassung in den Ansprüchen oder deren Rückbezügen.

Es zeigen schematisch:
- Fig. 1: eine Vorderansicht des erfindungsgemäßen Adapters,
- Fig. 2: eine Rückansicht des erfindungsgemäßen Adapters,
- Fig. 3: eine Seitenansicht des erfindungsgemäßen Adapters,
- Fig. 4: eine Draufsicht des erfindungsgemäßen Adapters,
- Fig. 5: eine Schnittansicht des erfindungsgemäßen Adapters,
- Fig. 6: eine perspektivische Darstellung des erfindungsgemäßen Adapters, und
- Fig. 7: eine Darstellung eines erfindungsgemäßen Wohnraumbelüftungssystems.

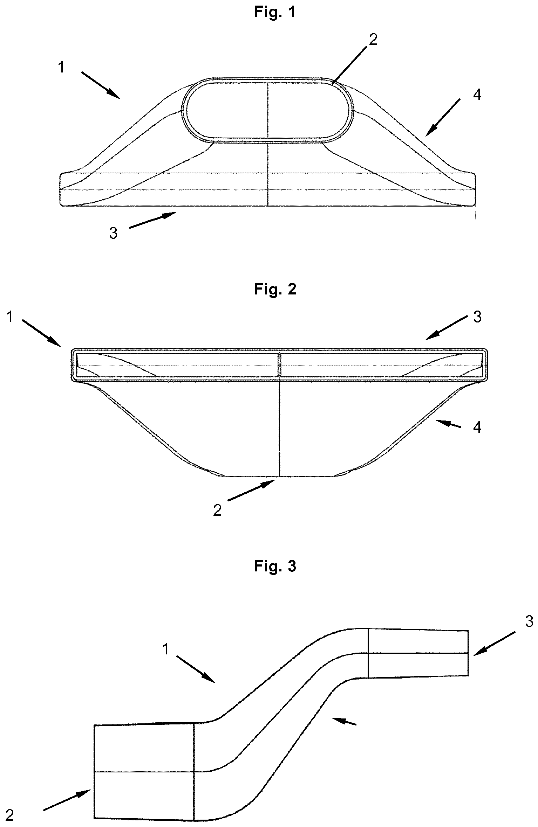

In Figur 1 ist eine Vorderansicht des Adapters 1 mit einem ersten Anschluss 2 und einem hier verdeckten zweiten Anschluss 3 gezeigt. Der erste Anschluss 2 weist einen ovalen Querschnitt auf, während der zweite Anschluss 3 einen rechteckigen Querschnitt aufweist. Beide Anschlüsse stehen über einen Übergangsabschnitt 4 in Strömungsverbindung.

Figur 2 zeigt eine Rückansicht des Adapters 1, wobei hier der im Querschnitt rechteckige zweite Anschluss 3 zu erkennen ist, während der erste Anschluss 2 vom Übergangsabschnitt 4 verdeckt ist. Ferner weist der zweite Anschluss 3 mittig eine Strömungswand 5 auf, welche das Strömungsverhalten innerhalb des Adapters 1 verbessert.

In Figur 3 ist eine Seitenansicht des Adapters 1 gezeigt, aus welcher sich insbesondere der Höhenversatz des ersten Anschlusses 2 und des zweiten Anschlusses 3 ergibt. Dieser Höhenversatz erlaubt es, den erfindungsgemäßen Adapter 1 in einem Wohnraumbelüftungssystem einen Wärmeaustauschsystem mit einem unterhalb davon angeordneten Zu- und Abluftsystem zu verbinden, sodass zum einen der Wärmeaustausch optimiert zum andern Strömungsgeräusche im Zu- und Abluftsystem nicht in den zu belüftenden Wohnraum gelangen.

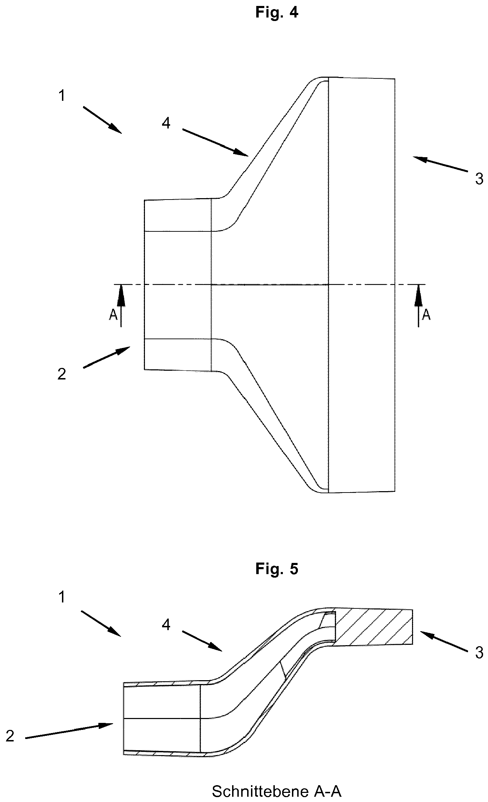

Figur 4 zeigt eine Draufsicht des Adapter 1 und kennzeichnet eine Schnittebene A-A der in Figur 5 gezeigten Schnittansicht. Sowohl aus der in der Figur 3 gezeigten Seitenansicht als auch aus der in Figur 4 gezeigten Draufsicht lässt sich erkennen, dass der erste Anschluss 2 und der zweite Anschluss 3 in Richtung des Übergangsabschnitts 4 aufweiten, was das Einstecken der Anschlüsse 2 und 3 in passende Zu- oder Abluftleitungen des Zu- oder Abluftlsystems erleichtert und gleichzeitig eine Abdichtung der Einsteckverbindung zwischen Adapter 1 und der jeweiligen Zu- oder Abluftleitung ermöglicht.

Figur 5 zeigt eine entlang der Schnittebene A-A liegende Schnittansicht, aus welcher insbesondere die innerhalb des zweiten Anschlusses 3 liegende Strömungswand 5 erkennbar ist. Ebenso wie die Seitenansicht der Figur 3 zeigt die Schnittansicht der Figur 5, dass die Höhe des zweiten Anschlusses 3 nur etwa 50 % der Höhe des ersten Anschlusses 2 beträgt. Dadurch wird die Bauraumausnutzung eines den Adapter umfassenden Wohnraumbelüftungssystems verbessert.

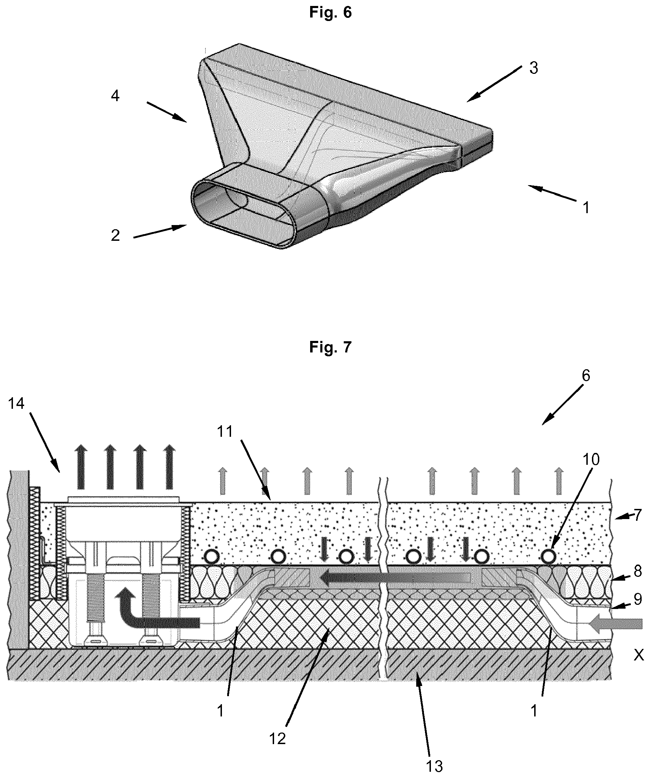

Figur 6 zeigt eine perspektivische Ansicht des erfindungsgemäßen Adapters 1 und es wird insoweit auf die obige Beschreibung verwiesen.

In Figur 7 ist ein erfindungsgemäßes Wohnraumbelüftungssystem 6 gezeigt. Dieses umfasst eine unterhalb einer Fußbodenklimatisierung 7 vorgesehenes Wärmeaustauschsystem 8 und ein Zu- und Abluftsystem 9. Beide stehen über den oben beschriebenen Adapter 1 in Strömungsverbindung.

Die Fußbodenklimatisierung 7 umfasst in an sich bekannter Weise Rohrleitungen 10, die ein Klimamittel zur Erwärmung oder Kühlung des Fußbodens 11 enthalten. Wie in Figur 7 gezeigt sind die Rohrleitungen 10 im unteren Bereich der Fußbodenklimatisierung 7 angeordnet.

Das Wärmeaustauschsystem 8 ist unterhalb der Fußbodenklimatisierung 7 angeordnet und steht mit dieser im Wärmeaustausch. Dadurch kann Wärme oder Kühlung aus der Fußbodenklimatisierung 7 auf die in das Wärmeaustauschsystem 8 geleitete Zu- oder Abluft übertragen werden. Das Wärmeaustauschsystem 8 ist hier trittschalldämmend ausgestaltet.

Die Zu- oder Abluft wird von einem Zu- und Abluftsystem 9 bereitgestellt, welche unterhalb des Wärmeaustauschsystems 8 und damit unterhalb der Trittschallebene angeordnet ist. Da das Zu- und Abluftsystem 9, anders als das Wärmeaustauschsystem 8, keinen Wärmeaustausch bereitstellen soll, kann diese wesentlich kleinflächiger ausgeführt werden, sodass unmittelbar unter dem Wärmeaustauschsystem 8 eine zusätzliche Dämmebene 12 vorgesehen werden kann, was Wärme- oder Kälteverluste an den Rohboden 13 minimiert.

Die so vortemperierte Zu- oder Abluft kann durch einen Luftaus- oder - einlass 14 abgegeben werden, dessen Ausgestaltung aus der DE 10 2012 008 431 U1 bekannt ist auf die insoweit Bezug genommen wird.

### Bezugszeichenliste

- 1: Adapter
- 2: erster Anschluss
- 3: zweiter Anschluss
- 4: Übergangsabschnitt
- 5: Strömungswand
- 6: Wohnraumbelüftungssystem
- 7: Fußbodenklimatisierung
- 8: Wärmeaustauschsystem
- 9: Zu- und Abluftsystem
- 10: Rohrleitungen
- 11: Fußboden
- 12: Dämmebene
- 13: Rohboden
- 14: Luftaus- oder -einlass

## Patentansprüche

1. Adapter (1), insbesondere für ein mit einer Fußbodenklimatisierung (7) verbindbares Wohnraumbelüftungssystem (8), mit einem ein ersten und einem zweiten Anschluss (2, 3) jeweils zur Verbindung mit einer Zu- oder Abluftleitung, wobei der erste und der zweite Anschluss (2, 3) über einen Übergangsabschnitt (4) in Strömungsverbindung miteinander stehen, **dadurch gekennzeichnet, dass** der erste und der zweite Anschluss (2, 3) zueinander höhenversetzt angeordnet sind.

2. Adapter (1) nach Anspruch 1, **dadurch gekennzeichnet, dass** der erste und/oder der zweite Anschluss (2, 3) und/oder der Übergangsabschnitt (4) eine Strömungswand (5) aufweisen.

3. Adapter (1) nach einem der vorherigen Ansprüche, **dadurch gekennzeichnet, dass** der erste und/oder der zweite Anschluss (2, 3) in Richtung des Übergangsabschnitts (4) aufweiten.

4. Adapter (1) nach einem der vorherigen Ansprüche, **dadurch gekennzeichnet, dass** der erste und/oder zweite Anschluss (2, 3) in die Zu- oder Abluftleitung einsteckbar ausgestaltet sind.

5. Adapter (1) nach einem der vorherigen Ansprüche, **dadurch gekennzeichnet, dass** das Verhältnis der Querschnittsfläche des ersten Anschlusses (2) zu der Querschnittsfläche des zweiten Anschlusses (3) 1,5:1 bis 1:1 beträgt oder umgekehrt.

6. Adapter (1) nach einem der vorherigen Ansprüche, **dadurch gekennzeichnet, dass** die Höhe des ersten Anschluss (2) 50% ± 10% der Höhe des zweiten Anschluss (3) entspricht oder umgekehrt.

7. Adapter (1) nach einem der vorherigen Ansprüche, **dadurch gekennzeichnet, dass** die Breite des ersten Anschluss (2) 250% ± 10% der Breite des zweiten Anschluss (3) entspricht oder umgekehrt.

8. Adapter (1) nach einem der vorherigen Ansprüche, **dadurch gekennzeichnet, dass** der erste Anschluss (2) einen rechteckigen Querschnitt und der zweite Anschluss (3) einen ovalen Querschnitt aufweist oder umgekehrt.

9. Wohnraumlüftungssystem (6) mit einem Zu- und Abluftsystem (9), einem Wärmeaustauschsystem (8), und einem Adapter (1) nach den vorherigen Ansprüchen, wobei das Zu- und Abluftsystem (9) über den Adapter (1) in Strömungsverbindung mit dem Wärmeaustauschsystem (8) steht, **dadurch gekennzeichnet, dass** das Zu- und Abluftsystem (9) unterhalb des Wärmeaustauschsystems (8) angeordnet ist.

10. Wohnraumlüftungssystem (6) mit einer Fußbodenklimatisierung (7) nach Anspruch 9, **dadurch gekennzeichnet, dass** Wärmeaustauschsystem (8) unterhalb der Fußbodenklimatisierung (7) angeordnet ist.
